# EUROPEAN PATENT APPLICATION

(11) **EP 2 088 517 A2**
(43) Date of publication of application: **12.08.2009**
(21) Application number: 09151215.2
(22) Date of filing: 23.01.2009
(51) Int. Cl.: G06F 17/30

(54) **Webpage processing method and system for mobile terminal**

(30) Priority: 31.01.2008 KR 20080009927
(71) Applicant: Samsung Electronics Co., Ltd., Suwon-Si, Gyeonggi-Do (KR)
(72) Inventor: Park, Sang Min c/oSamsung Electronics Co., Ltd, Suwon-si Gyeonggi-do (KR)
(74) Representative: Harrison Goddard Foote

(57) **Abstract**

A webpage processing method and system for a mobile terminal is provided for correctly displaying a webpage encoded with a character set which is not supported by the mobile terminal. In a webpage processing method of the present inventions, the mobile terminal receives a webpage from a web server, selects a character set to be applied to the webpage, renders the webpage with the selected character set, and determines whether to apply at least one other character set to the webpage. The mobile terminal also receives a converted webpage, corresponding to the webpage encoded with a character set which is not supported by the mobile terminal, from a webpage agent to display the webpage correctly.

## Description

### TECHNICAL FIELD OF THE INVENTION

The present invention relates to a mobile terminal and, in particular, to a webpage processing method and system for a mobile terminal that is capable of correctly displaying a webpage encoded with a character set which is not supported by the mobile terminal.

### BACKGROUND OF THE INVENTION

The use of mobile devices has increased significantly with the benefit of its portability. Particularly, mobile terminals (hereinafter, the term "mobile terminal" is interchangeably used with "mobile phone") have become indispensable items possessed by over 85% of South Korea's population.

Since portability is its main advantage, mobile terminals have evolved to lightweight and compact design with the developments of semiconductor and software technologies. The advance of mobile terminals has caused various user requirements and, in turn, the mobile terminals have been developed to become more sophisticated and versatile devices to meet such user requirements. As a result, recent mobile terminals integrate various functions that are supported by personal computers such as desktop and laptop computers. Among them, Internet access has become one of the most basic must-have functions.

In the meantime, conventional webpages, as information resources provided by an Internet access service, are more suited for monitors having relatively high resolution, whereby it is not appropriate to display the high resolution webpage on a display of a mobile terminal limited in size. Also, unlike the desktop and laptop computers having storage large enough to store a plurality of character sets and download another character set for displaying a web page built with the character set that is not installed yet, mobile terminals are limited in storage capacity. Also, even if mobile terminals were to have enough storage, due to the absence of a server providing appropriate character set, costly wireless resources for downloading the character set are not affordable.

For this reason, although a mobile terminal supports wireless Internet access service, the mobile terminal is likely to encounter a situation in failing to access a specific webpage or to display the webpage, even when accessed successfully, due to the absence of an appropriate character set. Particularly in the case of a mobile terminal manufactured for use in a dedicated area, such a mobile terminal is provided with character sets available with a language used in that area, whereby the Internet access function is useless in other areas.

### SUMMARY OF THE INVENTION

To address the above-discussed deficiencies of the prior art, it is a primary object to provide a webpage processing method and system for a mobile terminal that is capable of displaying a webpage encoded with a character set which is not supported by the mobile terminal.

In accordance with an exemplary embodiment of the present invention, a webpage processing method for a mobile terminal includes receiving a webpage from a web server; selecting a character set to be applied to the webpage; rendering the webpage with the selected character set; and determining whether to apply at least one other character set to the webpage.

In accordance with another exemplary embodiment of the present invention, a webpage processing method for a mobile terminal includes receiving, at a webpage agent, a webpage from a web server; generating an image information of the webpage; generating a link information of the webpage; and transmitting a converted webpage composed of the image information and the link information to the mobile terminal.

In accordance with another exemplary embodiment of the present invention, a webpage processing system includes a web server which provides a webpage and a mobile terminal which receives the webpage and renders the webpage with a character set stored in a memory unit, wherein the mobile terminal generates, when a number of errors occurred while rendering the webpage is greater than a threshold value, multiple versions of the webpage by applying at least one different character set.

In accordance with another exemplary embodiment of the present invention, a webpage processing system includes a web server which provides a webpage and a mobile terminal which receives the webpage and renders the webpage with a character set stored in a memory unit, wherein the mobile terminal generates different versions of the webpage by applying at least one different character set and displays one of the versions of the webpage in response to a selection command.

In accordance with another exemplary embodiment of the present invention, a webpage processing system includes a web server which provides a webpage; a webpage agent which receives the webpage from the web server and creates a converted webpage composed of an image information and a link information extracted from the webpage; and a mobile terminal which receives converted webpage from the webpage agent and displays the webpage on a screen.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts.

The above and other objects, features and advantages of the present invention will be more apparent from the following detailed description in conjunction with the accompanying drawings, in which:

FIG. 1 is a schematic diagram illustrating a webpage processing system for a mobile terminal according to an exemplary embodiment of the present invention;

FIG. 2 is a block diagram illustrating a configuration of the mobile terminal of FIG. 1;

FIG. 3 is a diagram illustrating formats of message headers exchanged between a mobile terminal and a web server for transmitting a webpage in the webpage processing system of FIG. 1;

FIG. 4 is a diagram illustrating a completely erroneous webpage displayed on a screen of the mobile terminal;

FIG. 5a is a diagram illustrating a screen image representing an incorrectly rendered webpage due to a character set mismatch;

FIG. 5ab is a diagram illustrating a process for selecting an appropriate character set in a webpage processing system according to an exemplary embodiment of the present invention;

FIG. 6 is a diagram illustrating a process for rendering a webpage using webpage conversion information in the mobile terminal of FIG. 2;

FIG. 7 is a flowchart illustrating a webpage processing method for a mobile terminal according to an exemplary embodiment of the present invention; and

FIG. 8 is a flowchart illustrating a webpage processing method for a mobile terminal according to another exemplary embodiment of the present invention.

### DETAILED DESCRIPTION OF THE INVENTION

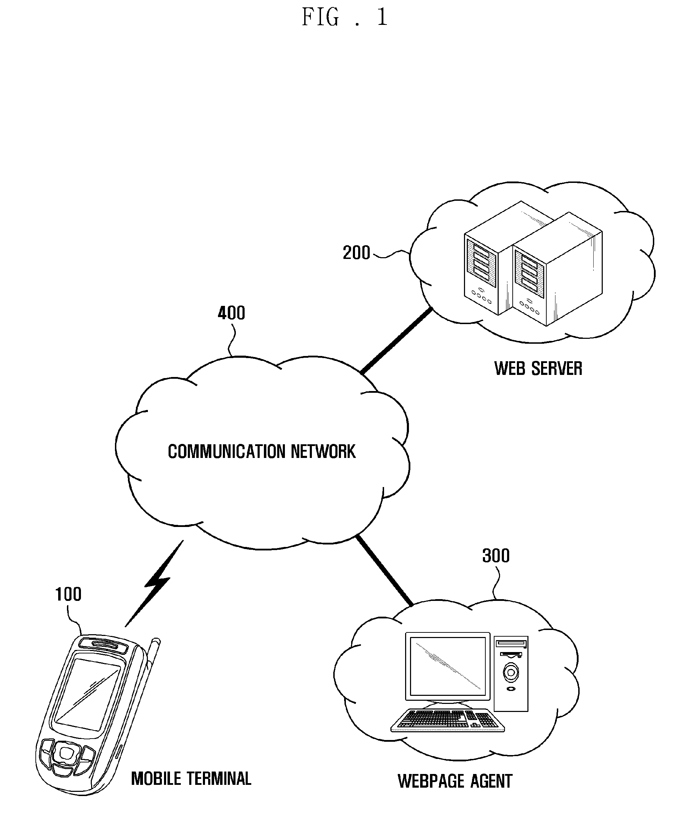

FIGURES 1 through 8, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged mobile terminal.

Certain terminologies are used in the following description for convenience and reference only and are not limiting. In the following detailed description, only the exemplary embodiments of the invention have been shown and described, simply by way of illustrating the best mode contemplated by the inventor(s) for carrying out the invention. As will be realized, the invention is capable of modification in various obvious respects, all without departing from the invention. Accordingly, the drawings and description are to be regarded as illustrative in nature and not restrictive.

In the following description, the term "character set" denotes a collection of characters that can be included in a webpage or information required for a web server to convert a specific bit stream to a character when transmitting the webpage to a mobile terminal. For example, a stream with a numeric value "12" is assigned to a specific character in a character set. That is, a character set is the information for converting a bit stream contained in a specific webpage to be output as a corresponding character.

In the following description, the term "webpage" denotes the data provided by a web server, and "converted webpage" denotes the data obtained by converting the webpage using a basic character set of the web server. The terms "image information" and "link information" denote the information extracted from a webpage by a webpage agent, and "webpage conversion information" denotes image information and link information. Image information refers to a webpage image output on a screen with a basic character set provided by the web server, and link information refers to data (such as a link, another webpage indicated by the link, an image file, an audio file, and a document file) and information on the locations indicated by a link. The link can be presented in the form of a text string for indicating a specific data. Although exemplary embodiments are described using the above defined terms, it is obvious to those skilled in the art that different terms can be used for the same meanings.

In the following description, the mobile terminal represents various types of mobile devices supporting Internet access to display a website provided by a web server. The mobile terminal can be any of a personal digital assistant (PDA), a Smartphone, a Code Division Multiple Access (CDMA) terminal, a Wideband CDMA (WCDMA) terminal, a Global System for Mobile Communication (GSM) terminal, and their equivalent devices.

FIG. 1 is a schematic diagram illustrating a webpage processing system for a mobile terminal according to an exemplary embodiment of the present invention.

Referring to FIG. 1, the webpage processing system includes a mobile terminal 100, a web server 200, and a webpage agent 300 internetworked through a communication network 400.

The mobile terminal 100 can access the web server 200 using a web browser through the communication network 400. Once the mobile terminal 100 connects to the web server 200, it can receive a webpage from the web server 200. The web browser can be provided with a web application program for processing the received webpage to be compatible with the mobile terminal 100. That is, the web application program selects a character set appropriate for displaying the webpage and resizes or partitions the webpage to be compatible with the mobile terminal. At this time, the web application program retrieves various character sets stored in the mobile terminal 100 and converts the webpage using specific character sets. In the case in which a conversion error occurs, the mobile terminal 100 adopts another character set automatically. Although there is no conversion error, the mobile terminal 100 can change the character set in response to the character change request command input by the user. In the case in which the mobile terminal 100 fails to display the webpage with all the character sets, the mobile terminal 100 requests from the webpage agent 300 image and link information of the converted webpage provided in a common format of the basic character set of the web server 200. The converted webpage download process is described in more detail later.

The web server 200 transmits the webpage encoded with specific character set to the mobile terminal 100 through a communication channel established with the mobile terminal. At this time, the web page is transmitted to the mobile terminal 100 in the form of a data stream according to the Transmission Control Protocol / Internet Protocol (TCP/IP). Actually, the web server 200 transmits the webpage to the mobile terminal in the form of a webpage transmission stream.

The webpage agent 300 receives the webpage from the web server 200, extracts the image information and link information from the webpage, and generates the webpage conversion information including the image information and link information. When the webpage conversion information is requested by the mobile terminal 100, the webpage agent 300 transmits the webpage conversion information to the mobile terminal 100. Upon receiving the webpage conversion information request from the mobile terminal 100, the webpage agent 300 receives the corresponding webpage, reformats the received webpage, and transmits the reformatted webpage to the mobile terminal 100. For this purpose, the webpage agent 300 stores the character sets required for reformatting the webpage correctly and outputs to the webpage converted into the webpage reformatted using appropriate character sets. The webpage agent 300 captures the image information of the screen displaying the converted webpage and extracts the links included in the webpage. For example, when the webpage includes characters or character strings as links aligned at specific positions, the webpage agent 300 generates link information with the information about the positions of the characters or character strings and links encoded on the characters or character strings. Here, the webpage agent 300 calculates the coordinates of start and end points of the characters or character strings from an origin point of the left top angular point of the screen. The webpage agent 300 extracts the coordinates of the start and end points of all links included in the webpage and creates the link information with the coordinates.

The communication network 400 includes a cellular network as an access network for the mobile terminal 100 and an IP network to which the web server 200 and the webpage agent 300 are attached. The communication network 400 includes a Wireless Access Protocol (WAP) network enabling the mobile terminal 100 to access the web server 200. The communication network 400 can be implemented on the basis of various communication protocols and network facilities.

In the above structured webpage processing system, the webpage provided by the web server 200 is output after being reformatted with the character sets installed in the mobile terminal 100. Here, the mobile terminal 100 outputs the webpage with one of the character sets which incurs the least errors. At this time, the user can select another character set using a menu option although the webpage is displayed in the current format with no error. In the webpage processing system, the web agent 300 creates the webpage conversion information on the webpage provided by the web server 200 and transmits the webpage conversion information to the mobile terminal 100 in response to the webpage conversion information request.

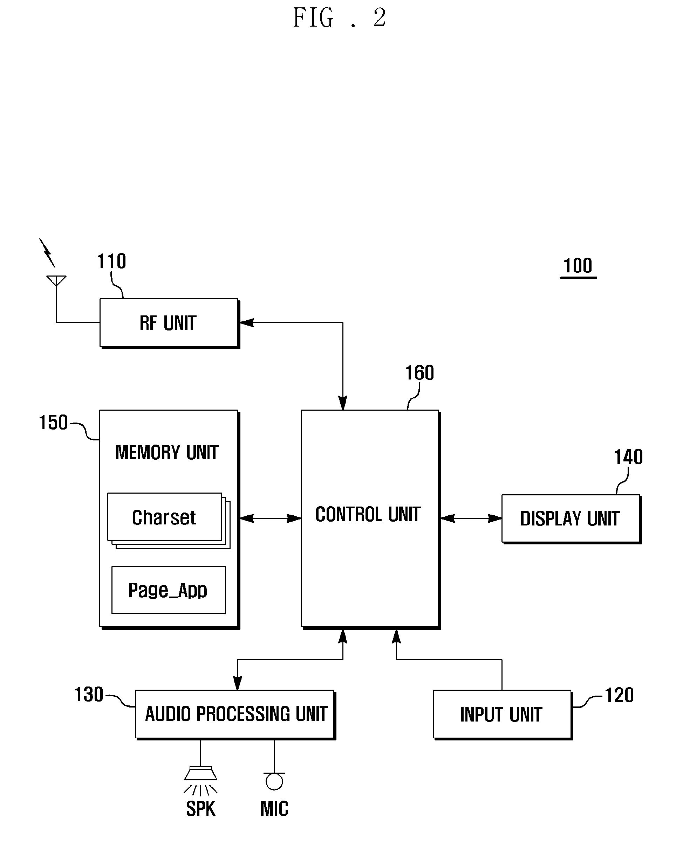

FIG. 2 is a block diagram illustrating a configuration of the mobile terminal of FIG. 1.

Referring to FIG. 2, the mobile terminal 100 includes a radio frequency (RF) unit 110, an input unit 120, an audio processing unit 130, a display unit 140, a memory unit 150, and a control unit 160.

The RF unit 110 is responsible for establishing voice and data communication channels under the control of the control unit 160. That is, the RF unit 110 establishes a radio link with a mobile communication system for voice, data, and video communications. The RF unit 110 includes an RF transmitter for up-converting and amplifying transmission signal frequency and an RF receiver for low noise amplifying and down-converting reception signal frequency.

Particularly in this embodiment, the RF unit 110 establishes channels for receiving the webpage from the web server 200 and exchanging webpage conversion signals with the web agent 300 under the control of the control unit 160.

The input unit 120 is provided with a plurality of alphanumeric keys for inputting alphanumeric data and a plurality of function keys for configuring and executing various functions of the mobile terminal 100. The function keys can be implemented in the form of navigation keys, side keys, and shortcut keys. The input unit 120 generates key signals in response to a user's key inputs for configuring and executing functions of the mobile terminal 100 and outputs the key signals to the control unit 160.

Particularly in this embodiment, the input unit 120 is configured to generate a web browser activation command, a web server selection command, a character set loading command, a webpage reformat request command, a converted webpage request command, a stored image information search command, a retrieved image display command, and an image playback command. The input unit 120 also enables inputting commands for making voice, data, and video call. For this purpose, the input unit 120 is provided with hot keys for quickly executing these respective functions.

The audio processing unit 130 processes the audio signal received from the control unit 160 and outputs the audio signal through a speaker (SPK) in the form of an audible sound wave, and converts the sound wave input through a microphone (MIC) to audio signal and outputs the converted audio signal to the control unit 160. Particularly in this embodiment, the audio processing unit 130 outputs an alarm sound for notifying that a webpage formatting error has occurred with the current character set.

The display unit 140 displays menu screens, user input data, and operation status information of the mobile terminal 100. That is, the display unit 140 displays various informative screens including an idle mode screen, a menu screen, a message composition screen, and a call progress screen. The display unit 140 can be implemented with a liquid crystal display (LCD) having touchscreen functionality. In this case, the display unit 140 operates as a part of the input unit 120.

Particularly in this embodiment, the display unit 140 is configured to display screens showing the web server access progress, webpage downloading progress, current character set-based webpage reformatting progress, and reformatted web page. The display unit 140 can display the screen showing the web agent access progress and converted webpage produced on the basis of the webpage conversion information received from the web agent 300. The visual interface of the display unit 140 is described in more detail later.

The memory unit 150 stores application programs required for operating functions of the mobile terminal 100, webpages received from the web server 200, and a plurality of character sets for rendering the webpages. The memory unit 150 can buffer the transmission stream of the webpage transmitted by the web server 200 and the webpage conversion information transmitted by the web agent 300. The memory unit 150 can be divided into a program region and a data region.

The program region stores the operating system (OS) of the mobile terminal, a web browser, and a web application program (Page_App) for converting the bits to characters using an appropriate character set. The Page_App converts the byte sequences contained in the webpage into a character sequence with the appropriate character set to display the webpage on the display unit 140 correctly under the control of the control unit 160. The Page_App can be integrated into the web browser. In response to a user request, the mobile terminal 100 executes the application program under the control of the control unit 160.

The data region stores application data generated while the application programs are running and user data input by the user, such as still and motion pictures captured by a camera module, phonebook data, and audio and video data and metadata thereof. Particularly, the data region stores the character sets that are loaded under the control of the control unit 160. In the case that the user request the webpage via the webpage agent 300, the webpage conversion information received from the webpage agent 300 is stored in the data region. The webpage conversion information includes image information and link information defining the links and sections on the image of the original webpage. The data region stores the image and link information in the form of a database table such that, when a selection signal is detected at the link on the image, the link data corresponding to the selected link is provided. Here, the link data can be any of another webpage, a still image, a moving image, an audio file, and a document.

The control unit 160 controls signaling among the internal components of the mobile terminal 100 such that a webpage is rendered with an appropriate character set to be correctly displayed. The control unit 160 controls operations associated with the webpage rendering such as the establishment of a communication channel with the web server 200 and webpage agent 300 and character set change according to situations where a conversion error is detected, a user request is detected while rendering the webpage with a character set, or the webpage conversion information is required. The webpage rendering operations are described in more detail along with an explanation on the visual interface later.

The above structured mobile terminal 100 renders the information included in the webpage using the pre-stored character sets so as to be correctly displayed on the screen. The mobile terminal 100 tests the webpage with different character sets and renders the webpage with a character set which incurs a least number of errors. When there is no character set that renders the webpage correctly, the mobile terminal 100 requests from the webpage agent 300 the webpage conversion information and renders the webpage using the webpage conversion information received from the webpage agent 300.

The webpage rendering errors can occur due to various reasons.

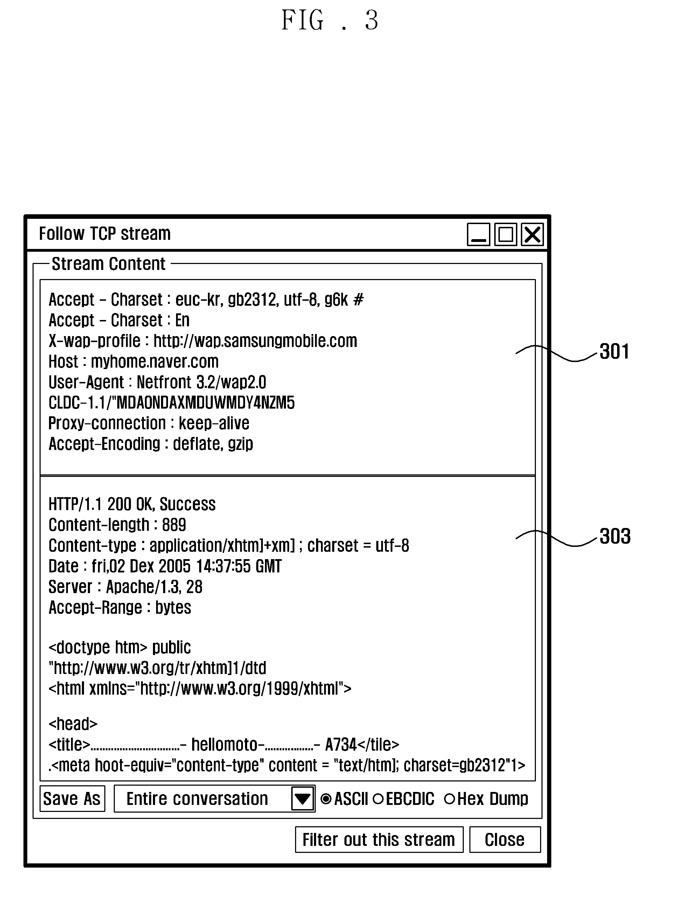

FIG. 3 is a diagram illustrating formats of message headers exchanged between a mobile terminal and a web server for transmitting a webpage in the webpage processing system of FIG. 1. In order to simplify the explanation, a request message header transmitted by the mobile terminal and a response message header transmitted by the web server are arranged in the message format.

Referring to FIG. 3, the request message header 301 transmitted by the mobile terminal 100 and a response message header 303 transmitted by the web server 200 are shown. The request message header 301 includes Accept-Charset field indicating what character sets are acceptable for the response. In FIG. 3, the Accept-Charset field indicates the character sets of utf-8, euc-kr, gb2312, and g6k#. The request message header 301 also includes another Accept-Chaset field set to En. The request message header 301 also includes an X-wap-profile field indicating a specific profile, a Host field specifying the Internet host, a User-Agent field containing information about the user agent originating the request, a Proxy-connection field indicating a proxy connection status, and an Accept-Encoding field restricting the content-codings that are acceptable in the response. The communication network checks the request message header 301 transmitted by the mobile terminal 100 and establishes a connection between the mobile terminal 100 and the web server 200.

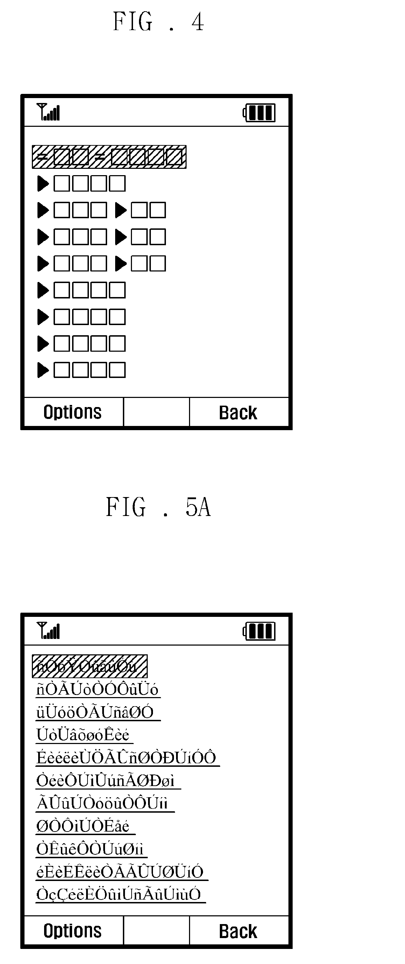

If the connection is established, then the web server 200 sends the response message header 303 including a code "200 OK, Success". The response message header 303 includes a Content-length field indicating the size of the message body, a Content-type field indicating the media type of the entity-body sent to the mobile terminal 100 with a charset set to utf-8, a date field representing the date and time at which the message was originated, a Server field containing information about the software used by the server to handle the request, and an Accept-Range field indicating the range requests for a resource acceptable by the server. The mobile terminal 100 checks the character sets indicated by Content-type field of the response message header 303 and loads the corresponding character set stored in the memory unit 150 such that the webpage rendered with the loaded character set is displayed on the display unit 140. In the case that the character set of a specific document is not identical with a preset character set of the mobile terminal 100, the control unit of the mobile terminal attempts to render the document with inappropriate character set, resulting in document display failure. In this case, the mobile terminal 100 outputs an erroneous webpage as shown in FIG. 4.

FIG. 4 is a diagram illustrating a completely erroneous webpage displayed on a screen of the mobile terminal.

Referring to FIG. 4, all objects constituting a webpage are presented in the forms of meaningless squares and triangles. Such a webpage error occurs when the character set of the original webpage and the character set used by the mobile terminal differ. For example, in the case that the webpage's character set is a 256 bit character set while the mobile terminal's character set is a 128 bit character set, the characters of the webpage cannot be mapped to the characters of the mobile terminal's character set. In this case, the characters are displayed as special characters such as squares and triangles. Different special characters can be used depending of the designer. The standard bit length of the character set varies depending on the webpage.

As described above, when the preset character set differs from the character set of the webpage, the mobile terminal 100 displays the webpage with predetermined special characters and detects the error. The control unit 160 of the mobile terminal 100 calculates the error occurrence frequency or error occurrence rate. If the error occurrence frequency or error occurrence rate is greater than a threshold value, then control unit 160 determines that the current character set is not appropriately matched with the character set of the webpage. In this case, the control unit 160 causes another character set to be loaded for rendering the webpage. While performing this process, the control unit 160 selects the one of the character sets stored in the memory unit 150 with which the least number of errors occurs and renders the webpage with the finally selected character set to be displayed. The control unit 160 also can cause the webpage rendered with different character sets to be displayed in multiple windows on the screen simultaneously. Accordingly, the user can select a window representing the most well rendered webpage using the input unit 120. Meanwhile, when the character set of the webpage is partially matched with the currently loaded character set of the mobile terminal 100 (i.e., both character sets have the same bit length), the mobile terminal 100 may not detect any conversion error. That is, when the two character sets have the same bit lengths but different from each other, the webpage is rendered incorrectly with undetectable errors.

FIG. 5a is a diagram illustrating a screen image presenting an incorrectly rendered webpage due to a character set mismatch, and FIG. 5ab is a diagram illustrating a process for selecting an appropriate character set in the webpage processing system according to an exemplary embodiment of the present invention.

When the mobile terminal's character set is identical with the document character set of the webpage in code length but not in language, the webpage is rendered incorrectly as shown in FIG 5a. In an exemplary case in which the document character set of the webpage and the mobile terminal's character set are identical in lengths (i.e., each represents 128 characters but the document character set is of Hebrew language and the mobile terminal's character set is of Korean language), the mobile terminal 100 renders each Hebrew character bit stream contained in the webpage with the Korean language character set. Accordingly, there is no conversion error, but the webpage is rendered incorrectly as shown in FIG. 5a.

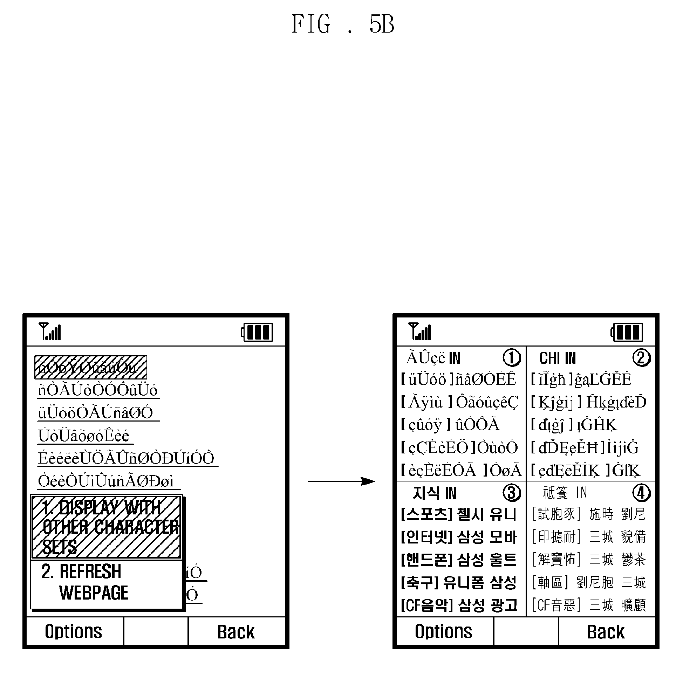

In this case, the mobile terminal 100 provides a menu option for the user to apply another character set to the webpage as shown in FIG. 5b. For this purpose, the webpage presentation screen is provided with a menu option button such that the user select can apply another character set through an "apply other character set" option provided by the menu option button. In response to the selection of the "apply other character set" option, the mobile terminal 100 displays the webpages rendered with various character sets. At this time, the control unit 160 can cause the webpages rendered with different character sets to be displayed on the display unit 140 simultaneously and the user can select a correctly rendered webpage. In the example of FIG. 5b, if the user selects the correctly rendered webpage ③, the control unit 160 causes the selected webpage to be displayed in full screen view.

As described above, when the document character set of a webpage differs from the mobile terminal's character set in code length (i.e., if an explicit error is detected in rendering process), the mobile terminal calculates the error occurrence frequency or error occurrence rate and applies the character set, which has incurred the least number of errors, for rendering the webpage. Meanwhile, when the webpage is converted with no error but incorrectly rendered, the user can apply other character sets for finding an appropriate character set to see the webpage using a character switching menu of the mobile terminal.

In the case that there is no appropriate character set for rendering the webpage correctly, the mobile terminal 100 can download webpage conversion information from a webpage agent 300 and render the webpage using the webpage conversion information.

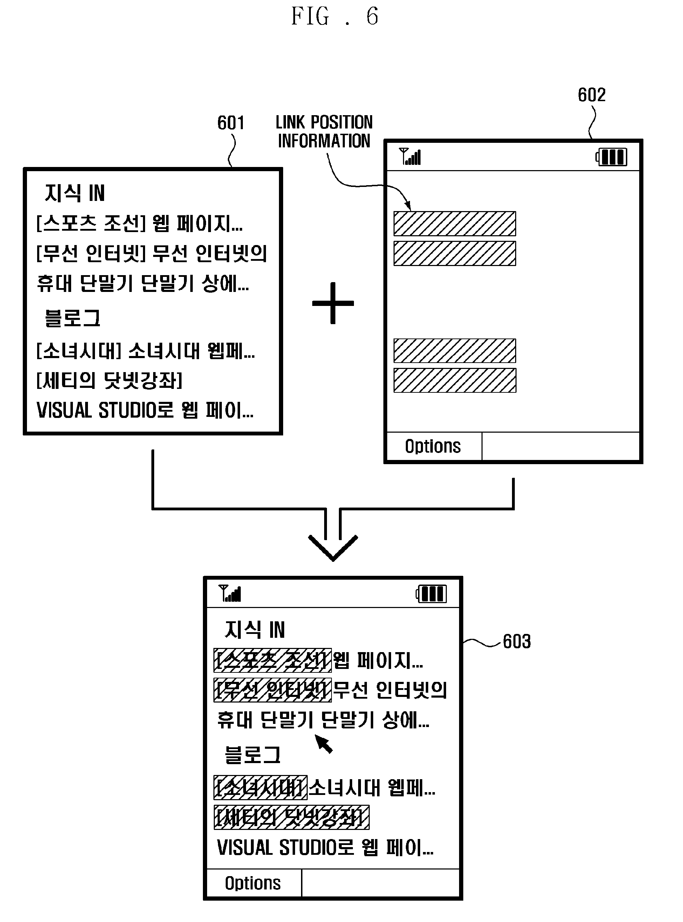

FIG. 6 is a diagram illustrating a process for rendering a webpage using webpage conversion information in the mobile terminal of FIG. 2.

Referring to FIG. 6, a webpage conversion information 603 downloaded from the webpage agent 300 consists of an image information 601 and a link information 602. In order to create the webpage conversion information, the webpage agent 300 receives the webpage from the web server 200 and creates the image information 601 and the link information 602 from the webpage. Preferably, the webpage agent 300 is provided with a character set which can correctly render the webpage and an output device for outputting the correctly rendered webpage. The webpage agent 300 captures the webpage image displayed on the output device and stores the captured image as the image information 601. The webpage agent 300 also checks the links and their positions within the correctly rendered webpage and stores the links and link positions as the link information 602. The link information 602 includes types and locations of the linked objects such as a specific webpage, image file, audio file, and document file. The webpage agent 300 provides the webpage conversion information 603 including the image information 601 and link information 602 in response to a request from the mobile terminal 100. If the webpage conversion information 603 is received, then the mobile terminal 100 causes the image information 601 to be displayed on the screen and the link information 602 is presented when a specific location is selected on the image information 601. That is, when a cursor is navigated to a specific position mapped to the link information 602 on the displayed image information 601 and a selection command (which can be input through the input unit 120 or a touch event on the touchscreen) is detected while the cursor is placed on the position of link information 602, the mobile terminal 100 causes a webpage linked through the link information 602 to be displayed. When the cursor is placed on the link information 602 or a touch event is detected on the link information 602, the control unit 160 causes the link information 602 to be highlighted or presented in different color for indicating the existence of the link information 602.

As described above, the webpage processing system according to this embodiment can reduce the webpage errors caused by a character set mismatch and render the webpage correctly when an appropriate character set is not stored in the mobile terminal.

A webpage processing method for the above structured mobile terminal is described hereinafter with reference to the accompanying drawings.

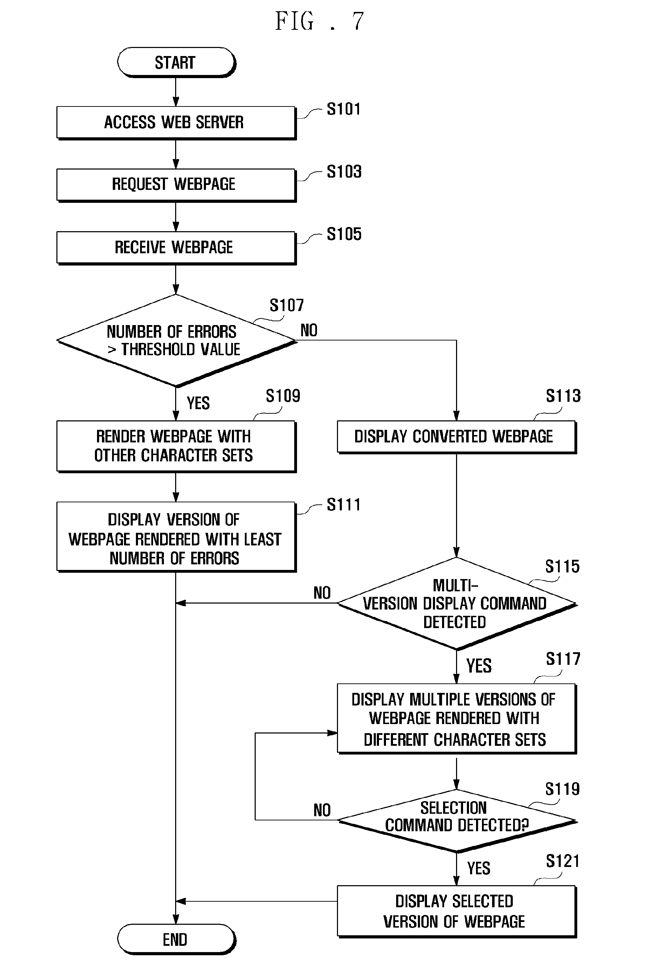

FIG. 7 is a flowchart illustrating a webpage processing method for a mobile terminal according to an exemplary embodiment of the present invention.

Referring to FIG. 7, the mobile terminal 100 first accesses the web server 200 by means of a web browser (S101) and requests from the web server 200 a webpage (S103). Here, the mobile terminal 100 establishes a communication channel according to a predetermined communication protocol and sends the information about the mobile terminal 100 to the web server 200 for receiving the webpage. The web server 200 checks the mobile terminal information and transmits the webpage with reference to the mobile terminal information.

The mobile terminal 100 receives the webpage from the web server (S105). Here, the webpage is received in the form of a data stream according to the communication protocol. If the data stream is downloaded completely or as much as an amount of data for covering a screen of the mobile terminal 100, then the mobile terminal 100 loads a character set corresponding to the document character set of the webpage and renders the webpage with the character set. The mobile terminal 100 can be provided with multiple character sets for rendering webpages encoded with various document character sets.

While rendering the webpage with the currently loaded character set, the mobile terminal 100 counts a number of errors and determines whether the number of errors is greater than a predetermined threshold value (S107). If the number of errors occurred while rendering the webpage is greater than the threshold value, the mobile terminal 100 renders the webpage with other character sets (S109). At this time, the mobile terminal 100 renders the webpage with more than one character set so as to generate multiple versions of the webpage rendered with different character sets.

Next, the mobile terminal 100 selects one of the multiple versions of the webpage generated with the least number of errors and displays the selected version of webpage on the screen of the display unit 140 (S111).

If no error occurs or the number of errors is not greater than the threshold value at step S107, then the mobile terminal 100 displays the webpage on the screen of the display unit 140 as it was rendered (S113).

While displaying the webpage rendered with the loaded character set, the mobile terminal 100 determines whether a multi-version display command is detected (S115). If a multi-version display command is detected, the mobile terminal 100 displays different versions of the webpage that are obtained by rendering with different character sets, simultaneously (S117). While displaying the different versions of the webpage, the mobile terminal 100 determines whether a selection command for one of the different versions of the webpage is detected (S119). If a selection command for a specific version of the webpage is detected, the mobile terminal 100 displays the selected version of the webpage in the full screen view (S121).

As described above, the webpage processing method according to this embodiment enables rendering a webpage with multiple character sets, especially when the webpage is incorrectly rendered, such that the mobile terminal displays the optimally rendered webpage according to the user's intention.

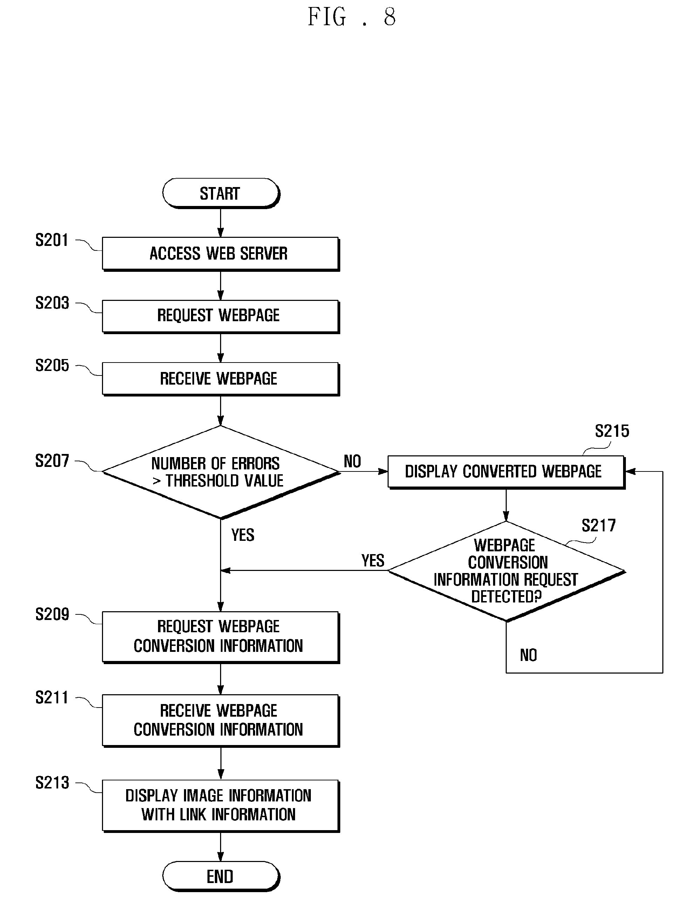

FIG. 8 is a flowchart illustrating a webpage processing method for a mobile terminal according to another exemplary embodiment of the present invention.

Referring to FIG. 8, the mobile terminal 100 first accesses the web server 200 (S201) and requests from the web server 200 a webpage (S203). Next, the mobile terminal 100 receives the webpage from the web server 200 (S205). Since steps S201 to S205 are identical with steps S101 to S105 of FIG. 7, detailed descriptions about these identical steps are omitted.

Once the webpage is received, the mobile terminal 100 counts the number of errors occurred while rendering the webpage with a currently loaded character set and determines whether the number of errors is greater than a predetermined threshold value (S207). If the number of errors is greater than the threshold value, the mobile terminal 100 requests from the webpage agent 300 the webpage conversion information (S209). Preferably, the mobile terminal 100 sends a webpage conversion information request message containing the information about the webpage received from the web server 200 and the information about the mobile terminal 100 to the webpage agent 300. Upon receipt of the webpage conversion information request message, the webpage agent 300 extracts the information about the webpage from the webpage conversion information request message and receives the webpage from the web server 200 using the webpage information. The webpage agent 300 creates the webpage information including the image information and link information obtained from the webpage and transmits the webpage conversion information to the mobile terminal 100.

The mobile terminal 100 receives the webpage conversion information from the webpage agent 300 in response to the webpage conversion information request message (S211) and displays the image information extracted from the webpage conversion information together with the link information (S213). That is, the mobile terminal 100 extracts the image information and the link information from the webpage conversion information and arranges the links of the original webpage on the image information correspondingly. Accordingly, when a specific link is selected on the image information by a key manipulation or a touch event thereon, a linked object is activated or information on the link object is displayed.

Meanwhile, if no error occurs or the number of errors is not greater than the threshold, the mobile terminal 100 displays the webpage on the screen of the display unit 140 as it was rendered (S215) and determines whether a webpage conversion information request command is detected (S217). If the webpage conversion information request command is detected, then the mobile terminal 100 transmits the webpage conversion information request message to the webpage agent 300 (S209).

Although the webpage conversion information is requested when the mobile terminal fails to render the webpage received from the web server in this embodiment, the mobile terminal can be configured to receive the webpage (i.e., the webpage conversion information) via the webpage agent as default. In this case, when a web server access command is input, the mobile terminal accesses the webpage agent to request a webpage provided by a specific web server such that the webpage agent downloads the webpage from the web server and sends the webpage conversion information acquired from the webpage to the mobile terminal.

As described above, the webpage processing method of the present invention enables the mobile terminal to render a webpage with the optimal character set among its available character sets or, when failing to render the webpage correctly with any of the character sets, use the webpage conversion information downloaded from the webpage agent, thereby always displaying the correctly rendered webpage.

As described above, the webpage processing method and system for a mobile terminal according to the present invention allows rendering a webpage with all available character sets supported by the mobile terminal to display the most correctly rendered version of the webpage and, when there is no character set to render the webpage correctly, download a converted webpage that can be presented correctly regardless of character set mismatch.

Although exemplary embodiments of the present invention are described in detail hereinabove, it should be clearly understood that many variations and/or modifications of the basic inventive concepts herein taught which may appear to those skilled in the present art will still fall within the spirit and scope of the present invention, as defined in the appended claims.

Although the present disclosure has been described with an exemplary embodiment, various changes and modifications may be suggested to one skilled in the art. It is intended that the present disclosure encompass such changes and modifications as fall within the scope of the appended claims.

## Claims

1. A webpage processing method for a mobile terminal, comprising:
receiving a webpage from a web server;
selecting a character set to be applied to the webpage;
rendering the webpage with the selected character set; and
determining whether to apply at least one other character set to the webpage.

2. The webpage processing method of claim 1, wherein determining whether to apply another character set comprises:
checking whether a number of errors occurred while rendering the web page is greater than a threshold value;
generating, when the number of errors is greater than the threshold value, different versions of the webpage by applying the at least one other character set to the webpage;and
presenting at least one of the different versions of the webpage on a screen.

3. The webpage processing method of claim 2, wherein presenting at least one of different versions of the webpage comprises:
comparing numbers of errors occurred in the different versions of the webpage; and
presenting the version of the webpage rendered with the least number of errors.

4. The webpage processing method of claim 1, wherein determining whether to apply at least one other character set to the webpage comprises:
checking whether a number of errors occurred while rendering the web page is greater than a threshold value;
requesting, when the number of errors is greater than the threshold value, a converted webpage comprising an image information and a link information from a webpage agent; and
receiving, from the webpage agent, the converted webpage.

5. The webpage processing method of claim 1, further comprising:
requesting, when an error is detected while rendering the webpage with the selected character set, the converted webpage comprising an image information and a link information from a webpage agent; and
receiving the converted webpage from the webpage agent.

6. The webpage processing method of claims 4 and 5, wherein a link information comprises:
positions of links extracted from the webpage;
characters or character strings representing the links; and
data indicated by the links.

7. The webpage processing method of claim 1, further comprising:
detecting a different character set application command input by a user, the different character set application command indicating at least one character set;
generating different versions of the webpage by applying the at least one character set; and
displaying the different versions of the webpage.

8. The webpage processing method of claim 7, wherein displaying the different versions of the webpage comprises:
presenting the different versions of the webpage on a screen, simultaneously; and
displaying, when a command for selecting one of the different versions is detected, the selected version of the webpage on the screen as a full screen image.

9. A webpage processing system comprising:
a mobile terminal which receives a webpage from a web server and renders the webpage with a character set stored in a memory unit,
wherein the mobile terminal generates, when a number of errors occurred while rendering the webpage is greater than a threshold value, multiple versions of the webpage by applying at least one different character set.

10. The webpage processing system of claim 9, wherein the mobile terminal generates different versions of the webpage by applying at least one different character set in response to a different character set application command and displays at least one of the different versions of the webpage.

11. The webpage processing system of claims 9, wherein the mobile terminal presents the different versions of the webpage on a screen simultaneously and displays, when a command for selecting one of the different versions of the webpage is detected, the selected version of the webpage on the screen as a full screen image.

12. The webpage processing system of claim 9, further comprising receiving a converted webpage composed of an image information and a link information extracted from the webpage from a webpage agent.

13. The webpage processing system of claim 12, wherein the link information comprises:
positions of links extracted from the webpage;
characters or character strings representing the links; and
data indicated by the links.

14. The webpage processing system of claim 9, wherein the mobile terminal compares numbers of errors occurred in the different versions of the webpage and presents the version of the webpage rendered with the least number of errors.
